# EUROPEAN PATENT APPLICATION

(11) **EP 1 432 181 A2**
(43) Date of publication of application: **23.06.2004**
(21) Application number: 03104138.7
(22) Date of filing: 10.11.2003
(51) Int. Cl.: H04L 12/56

(54) **packet classifier**

(30) Priority: 19.12.2002 GB 0229647
(71) Applicant: Zarlink Semiconductor Limited, Swindon, Wiltshire SN2 2QW (GB)
(72) Inventor: FLOYD, Geoffrey, E., PL20 7LR, Yelverton (GB); FROST, Timothy, M, E., PL6 7QE, Plymouth (GB)
(74) Representative: Robinson, John Stuart

(57) **Abstract**

A packet classifier (7) is provided for classifying packets flowing through a node (2) of a packet switching network (1). The classifier comprises a plurality of stages (12 to 15) which perform in hardware different steps of the packet classification on each packet presented to the classifier (7). The stages (12 to 15) process different packets simultaneously and each stage (13 - 15) processes each packet when the previous stage (12 - 14) has finished processing the packet.

## Description

The present invention relates to a packet classifier for classifying packets from a packet switching network. Such a packet classifier may be used, for example, in a system for sending time division multiplex (TDM) telephony data across a packet network.

Packet classifiers are required to classify packets being transported through high data rate packet networks, such as one gigabit or ten gigabit Ethernets. In TDM transmission across packet networks, the data tend to be sent in small packets so as to reduce the overall latency of the system. Packet loss must be minimised because retransmission is not generally possible and missing packets introduce errors into a TDM data stream. Thus, a packet classifier is required to classify minimum-sized packets arriving at peak rates without loss.

Packet classifiers are also required to support a range of protocols including existing protocols, such as Ethernet, IPv4, IPv6, MPLS, UDP, L2TP and RTP, together with emerging protocols, such as IETF-L2TPv3 and PWE3 standards. Incoming packets are required to be classified across multiple layers in a protocol stack. Also, false or faulty packets should be rejected so as to prevent or reject disturbance on TDM data flow and so as to prevent deliberate attempts at sabotage.

One known type of packet classifier is based on a network processor programmed to perform the appropriate classification routines. Such an arrangement is flexible and adaptable to support multiple protocol stacks. However, such a network processor is generally not able to support minimum sized packets arriving at the maximum data rate on a high-speed packet network.

According to a first aspect of the invention, there is provided a packet classifier for classifying packets flowing through a node of a packet switching network, comprising first to Nth stages, where N is an integer greater than 1, arranged to perform in hardware different steps of the packet classification on each packet presented to the classifier, the stages being arranged to process different packets simultaneously and each ith stage being arranged to process each packet when the (i-1)th stage has processed the packet for each integer i such that 1<i ≤ N.

The step performed by each ith stage may be dependant on the result of the step performed by the (i-1)th stage.

A first of the stages may be arranged to identify the protocol of each packet. The first stage may be arranged to assign a template number corresponding to the identified protocol. The first stage may be arranged to compare at least part of the header of each packet with first predetermined data for a match. The first predetermined data may be programmable in the first stage. The first stage may comprise a plurality of first registers for containing the first predetermined data.

The first stage may be arranged to mask the result of the comparison in accordance with second predetermined data. The second predetermined data may be programmable in the first stage. The first stage may comprise a plurality of second registers for containing the second predetermined data.

The first stage may be arranged to discard any packet for which no match is found.

A second of the stages may be arranged to extract from the header of each packet at least one field dependant on the identified protocol. The at least one field may represent a destination of the packet.

A third of the stages may be arranged to identify the destination of the packet. The destination may be identified as a flow number. The third stage may be arranged to compare at least part of the at least one extracted field with third predetermined data. The third predetermined data may be programmable in the third stage.

The third stage may comprise a content addressable memory arrangement for the third predetermined data.

The content addressable memory arrangement may comprise a memory for the third predetermined data, a comparator for comparing the at least one extracted field with the third predetermined data, a masking arrangement for masking the comparator output in accordance with predetermined masking data, and a controller for signalling the packet destination when a match is found. As an alternative, the content addressable memory arrangement may comprise a plurality of memories for the third predetermined data, a plurality of comparators for simultaneously comparing the at least one extracted field with the predetermined data from respective ones of the memories, a plurality of masking arrangements for simultaneously masking the outputs of respective ones of the comparators in accordance with predetermined masking data, and a controller for signalling the packet destination when a match is found in any one of the masked comparator outputs.

The third stage may comprise means for performing a hash function on at least part of the at least one extracted field to derive an address and a memory containing a hash table and arranged to be addressed by the derived address to return the packet destination. The third stage may be arranged to perform a linear search if the returned address is not unique.

A fourth of the stages may be arranged to confirm the destination of the packet. The fourth stage may be arranged to compare at least part of the at least one extracted field with a field corresponding to the destination identified by the third stage and to confirm the destination if a match is found. The fourth stage may be arranged to discard the packet if no match is found.

It is thus possible to provide an arrangement which allows packets from a high data rate packet network to be classified. In particular, such an arrangement is capable of classifying minimum sized packets arriving at peak rates with little or no loss. Each stage is in the form of hardware as opposed to a programmable data processor under the control of software, and is therefore capable of operating at higher speed. However, the stages may be made programmable to the extent of adapting operation to deal with a range of protocols, including existing and future protocols, and can support protocol stacks.

The invention will be further described by way of example, with reference to the accompanying drawings, in which:
Figure 1 is a block schematic diagram illustrating a packet interface including packet classifier constituting an embodiment of the invention;
Figure 2 is a block schematic diagram of the packet classifier of Figure 1;
Figure 3 is a block schematic diagram of a first stage of the packet classifier shown in Figure 2;
Figure 4 is a block schematic diagram of a second stage of the packet classifier shown in Figure 2;
Figure 5 is a block schematic diagram of a third stage of the packet classifier shown in Figure 2;
Figure 6 is a block schematic diagram of an alternative third stage of the packet classifier shown in Figure 2;
Figure 7 is a block schematic diagram of a further alternative third stage of the packet classifier shown in Figure 2; and
Figure 8 is a block schematic diagram of a fourth stage of the packet classifier shown in Figure 2.

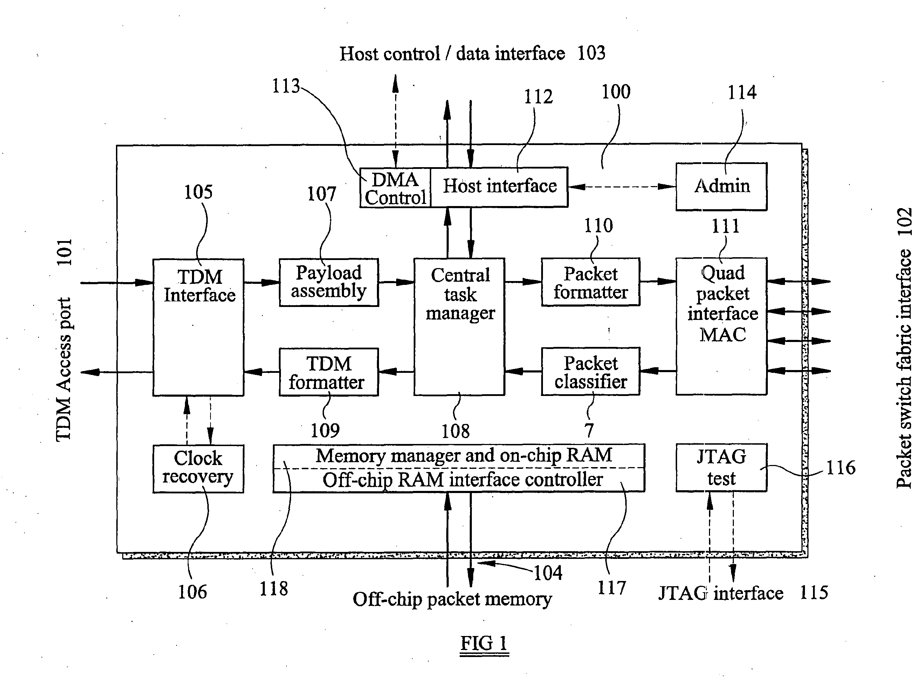

Figure 1 illustrates a packet interface 100 providing a time division multiplex (TDM) access port 101 and a packet switch fabric interface 102 for interfacing between one or more TDM data flows and one or more connections to a packet switching network. The packet interface 100 has a host control/data interface 103 for connection to a host controller such as a computer. The packet interface 100 is also provided with off-chip packet memory (not shown) connected to a port 104 for storing packet data and headers of packets passing through the packet interface 100.

The TDM access port 101 is connected to a TDM interface 105 provided with a clock recovery arrangement 106. An incoming TDM data flow is converted by a payload assembly block 107 into packet payloads which are supplied to a central task manager 108. Conversely, packets received from the packet switching network via the interface 102 and intended for the TDM data flows are supplied by the task manager 108 to a TDM formatter 109, which supplies data in a format suitable for the interface 105.

Packets for transmission to the packet switching network are supplied by the task manager 108 to a packet formatter 110, which formats the packets and supplies them to a quad packet interface MAC 111 for transmission to the packet switching network. Conversely, incoming packets from the network are supplied by the interface MAC 111 to a packet classifier 7 constituting an embodiment of the invention. Classification information provided by the classifier 7 is supplied to the task manager 108.

The packet interface 100 has a host interface 112 and a direct memory access (DMA) controller 113 for interfacing with the host controller (not shown) via the interface 103. An administration block 114 controls operation of the packet interface 100 under supervision of the host controller. A JTAG (Joint Test Action Group) interface 115 is connected to a JTAG test block 116. The block 116 controls testing of on-board memories, logic scan paths and a JTAG boundary scan chain in accordance with standard IEEE 1149.1.

The packet classifier 7 determines the destination of packets arriving from the packet switching network via the interface 102 and the interface MAC 111. Depending on the contents of the header packets, each packet payload data with or without the corresponding header may be routed by the central task manager 108 to the TDM access port 101, to the host by means of the DMA control 113, or back to the packet switching network, which may comprise a local area network (LAN). The packet payload data are temporarily stored or buffered via a memory manager and interface controller 117, 118 in either on-chip memory or off-chip memory. Each block of the packet interface 100 can request access to the on-chip or off-chip packet memory via the memory manager, which arbitrates between blocks requesting access and controls the read and write access to the memories. The task manager 108 passes information about the location of the data in memory between the other blocks of the interface 100.

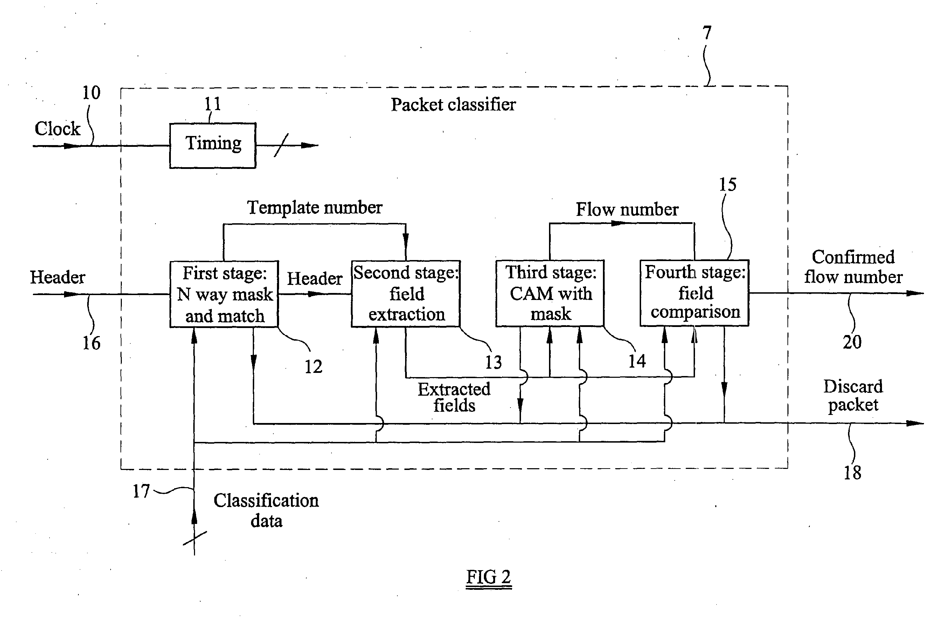

Figure 2 illustrates the packet classifier 7 of Figure 1 in more detail. The classifier 7 receives a clock at an input 10 connected to a timing block 11, which supplies timing signals to the other parts of the classifier 7 for controlling the operation thereof. The classifier 7 also comprises first to fourth stages 12 to 15, which are embodied as hardwired circuits dedicated to performing their individual functions. The headers from the packet receiver 4 are supplied to an input 16 connected to an input of the first stage 12. When the first stage 12 has performed its processing steps, the second stage 13 performs its processing in respect of the packet so that the first stage 12 may then process the header of the next packet to arrive. Thus, each packet is processed by the first to fourth stages 12 to 15 in order with the individual stages simultaneously processing different packets. The stages 12 to 15 are thus arranged as a pipeline with the packets effectively passing through each pipeline stage in turn and with each stage processing a different packet. Each pipeline stage 12 to 15 takes a number of clock cycles in order to complete its processing. For example, for minimum sized packets (64 bytes) arriving on two G Ethernet ports, the packet classifier must be capable of accepting a new packet for classification every 33 clock cycles in the case of a 100MHz clock.

The first stage 12 is programmed with classification data from an input 17 allowing N different packet protocols to be detected. In particular, the first stage 12 compares the appropriate fields in the packet header with data identifying the protocol to which the packet belongs and assigns a template number representing the protocol. Conversely, if no match is found, the first stage 12 supplies a discard packet signal at an output 18.

The second stage 13 receives the packet header and the template number from the first stage 12 and extracts from the header one or more fields as determined by the template number.

The third stage 14 is based on content addressable memory (CAM) techniques addressed by the extracted field or fields corresponding to the template number. The third stage 14 also receives the classification data from the input 17 and includes an M deep CAM for identifying the flow number. Thus, the appropriate data for each flow number are programmed in the third stage 14 and the packet being processed can be allocated to any one of the M data flows in accordance with the extracted header fields. The third stage 14 either determines the flow number for the packet or supplies a discard packet signal to the output 18.

The flow number and the extracted fields are supplied to a fourth stage 15 which performs a field comparison. In particular, the fourth stage 15 compares the extracted fields appropriate to the flow number with pre-programmed fields determined by the flow number. If a match is found, a confirmed flow number signal is supplied to an output 20. Otherwise, a discard packet signal is supplied to the output 18.

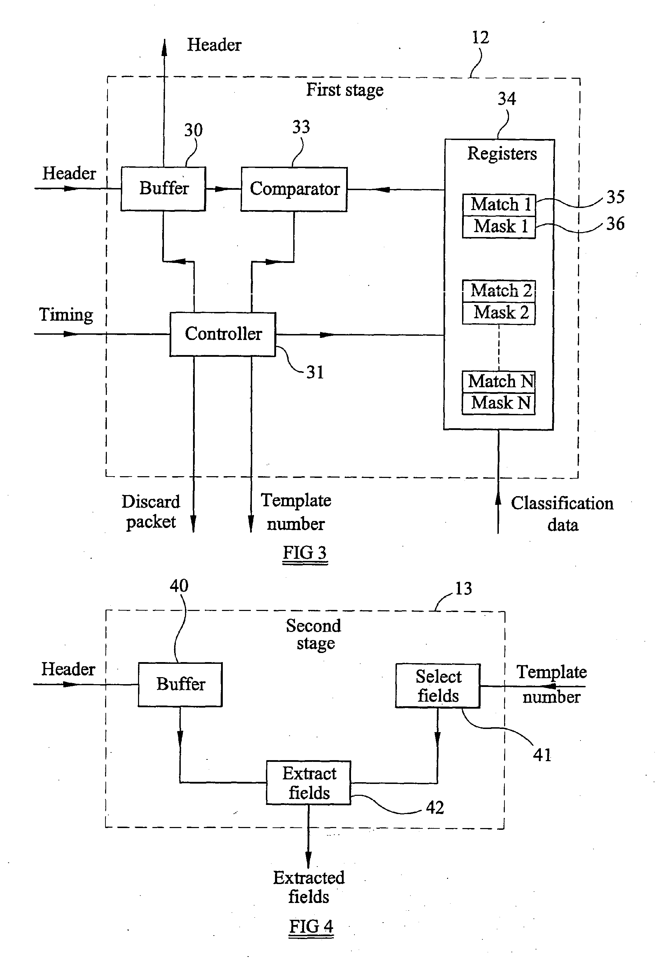

Figure 3 shows the first stage 12 of Figure 2 in more detail. The first stage comprises a buffer 30 which receives each header in turn from the input 16 and is controlled by a controller 31. The header for the packet being processed by the first stage 12 is retained in the buffer 30 until processing is complete, after which the header is forwarded from the buffer 30 to the second stage 13. The header is also supplied from the buffer 30 to a comparator 33, which performs a comparison with the contents of a set of registers 34.

The controller 31 receives timing signals from the timing circuit 11 and controls the operation of the buffer 30, the comparator 33 and the registers 34. The controller 31 also receives the output of the comparator 33 and supplies discard packet signals or template numbers as appropriate. The classification data are supplied to the registers during programming.

The registers 34 are arranged as N pairs of registers, with each pair containing match and mask data relating to a respective protocol. Match and mask data can be added or deleted as appropriate, for example to extend the packet classifier capability to a new protocol or to delete data relating to a protocol which is no longer to be supported.

For each packet arriving at the packet classifier, the header is entered in the buffer 30 and is compared in the comparator 33 with the contents of each pair of registers in turn until a match is found or all of the pairs of registers have been used without finding a match. The header is compared against the contents of each match register, starting with the first such register 35, and the result of the match is masked with the contents of the corresponding mask register 36 so that only the relevant protocol fields are checked. When a match is found, the controller 31 supplies the corresponding template number for use by the second and third stages 13 and 14. If no match is found, the controller 31 supplies a discard packet signal.

Figure 4 illustrates the second stage 13 in more detail. The header for the packet which has just been processed by the first stage 12 is supplied to a buffer 40 of the second stage 13. Simultaneously, the template number from the first stage 12 is supplied to a select fields block 41, which selects those fields required to be extracted in accordance with the template number determined by the first stage 12. The header and a select fields signal are supplied to an extract fields block 42, which extracts from the header those fields which are required by the third and fourth stages 14 and 15 for subsequent processing. Although not shown, the block 41 is also programmable with classification data so that those fields which are to be extracted can be set in accordance with each protocol corresponding to a template number.

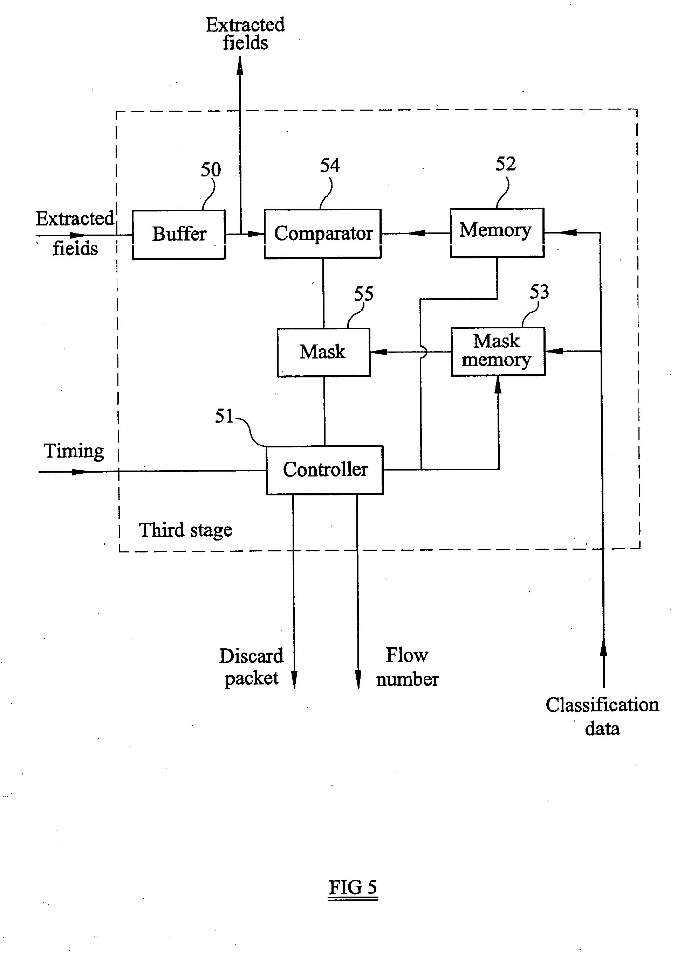

Figure 5 illustrates the third stage 14 in more detail. The extracted fields from the second stage 13 are supplied to a buffer 50, which passes the extracted fields to the fourth stage when processing of the current packet by the third stage is complete. The extracted fields are supplied as addresses to a content addressable memory (CAM) arrangement, which has previously been programmed with the classification data to deliver the flow number for the outgoing data flow to which the packet is allocated when the extracted fields are presented.

Although an actual hardware CAM may be used in the third stage 14 and has the advantage that the flow number (if present) can be retrieved in a single memory read cycle, CAMs are relatively expensive to provide. Accordingly, the third stage 14 shown in Figure 5 makes use of a cheaper arrangement which requires more read cycles in order to simulate the operation of a CAM.

A controller 51 receives timing signals from the timing block 11 and supplies address signals to the address inputs of memories 52 and 53. The memory 52 is pre-programmed by the classification data with predetermined field data and the memory 53 is pre-programmed with corresponding mask data. The outputs of the buffer 50 and the memory 52 are supplied to a comparator 54, whose output is supplied to a mask circuit 55. The mask circuit 55 receives the mask data from the memory 53 and supplies an output to the controller 51.

During operation, the controller 51 steps through the addresses of the memories 52 and 53. The comparator 54 compares the field data at each location of the memory 52 with the extracted fields in the buffer 50 and the result of the comparison is masked in the mask circuit 55 by the corresponding mask data from the memory 53. If a match is found, the controller supplies the flow number for the extracted fields, which flow number is a function of the address which was supplied to the memories 52 and 53 and which resulted in a match. Conversely, if the controller 51 cycles through all of the addresses, or all of the occupied address of the memories 52 and 53, without finding a match, the controller 51 supplies a discard packet signal.

In order to accommodate a large number of data flows, it would be necessary to provide memories 52 and 53 having a correspondingly large address range and this would result in a relatively large number of read cycles of the memories being required to find a match with field data stored at a relatively high address within the range or to cycle through all of the addresses if no match was found. In order to reduce the effective CAM read cycle time, the blocks 52 to 55 may be multiplicated with the memories of each block being addressed simultaneously by the controller 51 and, if a match is found, the controller 51 deriving the flow number from the current address and the one of the blocks signalling a match. Thus, where each of the memories of each of the blocks has m addresses and there are n blocks, a total of m x n memory locations can be read in m memory read cycles.

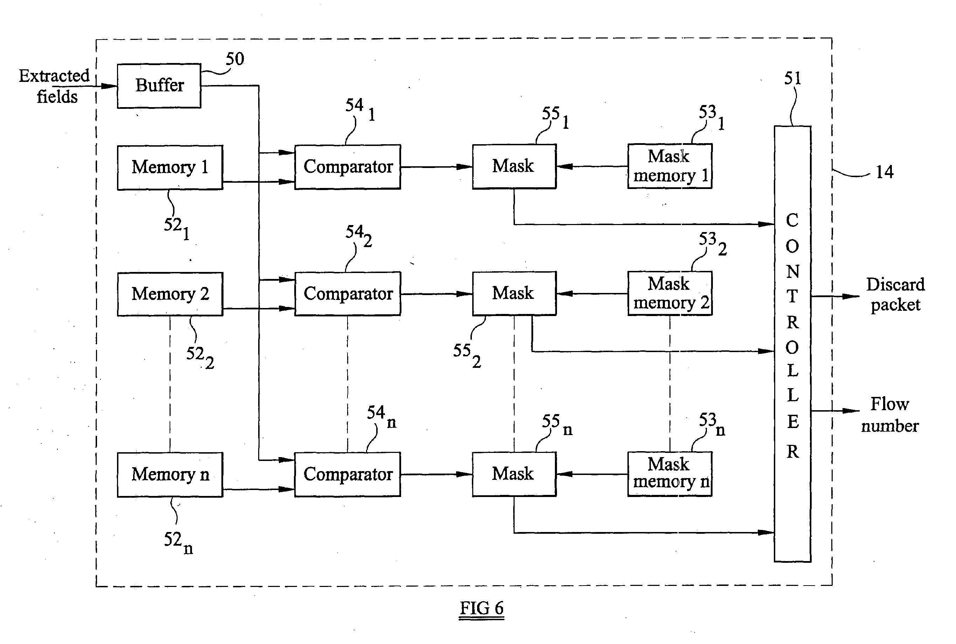

An arrangement of this type is illustrated in Figure 6. The buffer 50 supplies the extracted fields to memories 51₁- 51ₙ, which receive field data from memories 52₁-52ₙ, respectfully. The outputs of the comparators 54₁-54ₙ are supplied to mask circuits 55₁-55ₙ, respectively, which receive mask data from the mask memories 53₁-53ₙ, respectively. The outputs of the mask circuits are supplied to the controller 51 and, if a match is found, the flow number is derived from the address currently supplied to the memories and from which of the mask circuits 55₁-55ₙ has detected a match.

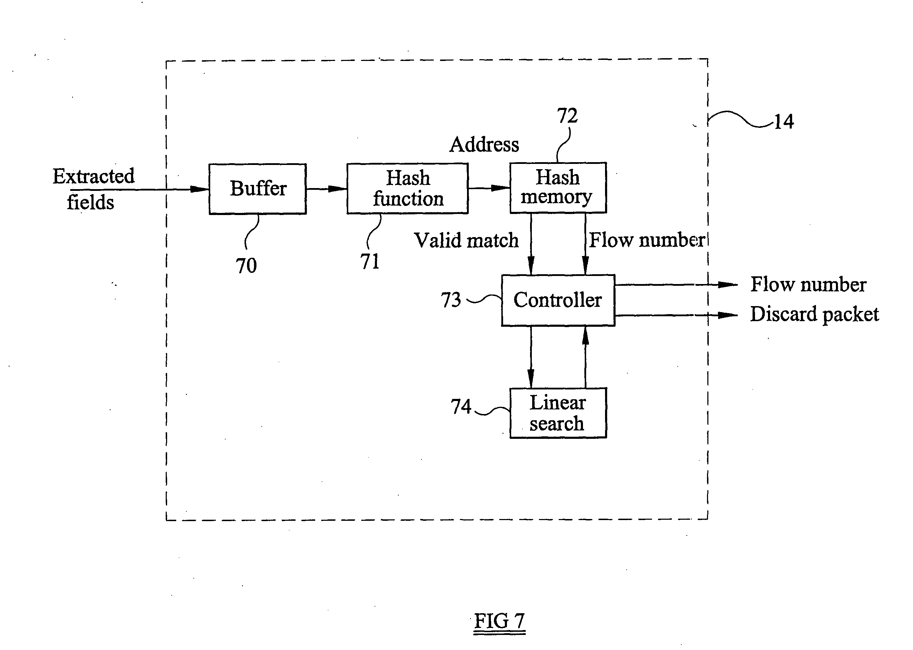

As an alternative to the CAM arrangements illustrated in Figures 5 and 6, the third stage 14 may be embodied by means of a hash table as shown in Figure 7. The extracted fields are supplied to a buffer 70 and then to a hash function block 71. The hashing function is performed on the extracted fields and computes an address which is supplied to a hash memory 72 containing a hash table. The memory indicates whether a valid match has been found and returns the flow number to a controller 73. However, the result may not be unique because the hash function is not guaranteed to produce a unique address for each data flow. If the result is not unique, a second stage look-up is required. This may be achieved by using an alternative hashing function to generate a new address for accessing the hash table. Alternatively, a linear search block 74 may perform a linear search in a separate table. If no flow number or no unique flow number is found, a discard packet signal is generated.

Although a CAM arrangement always produces a result in a well-defined maximum time, in practice such arrangements are limited to relatively small numbers of flows. For embodiments where relatively large numbers of flows have to be supported, a hash table arrangement may be more appropriate.

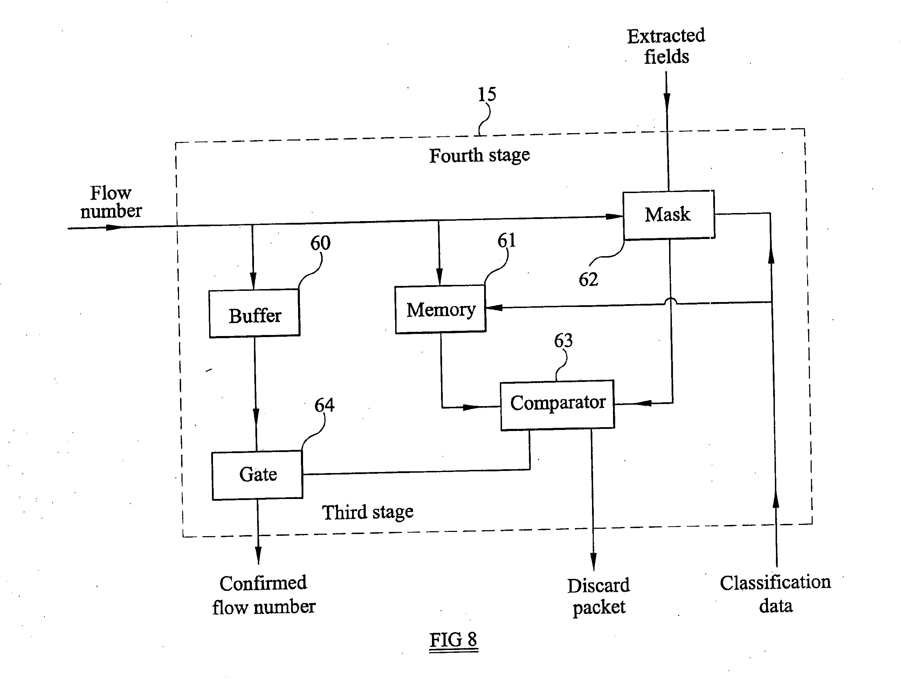

Figure 8 illustrates the fourth stage 15 in more detail. The flow number from the third stage 14 is supplied to a buffer 60, as an address to a memory 61 and as an address to a masking arrangement 62, which receives the extracted fields from the second stage 13. The memory 61 and the masking arrangement 62 are pre-programmed with classification data. In particular, the memory 61 contains appropriate validation data at the address of each flow number. Such validation data is present in the header of any complete and valid packet intended for the data flow corresponding to the flow number.

Protocols such as RTP and L2TPv3 make provision for the packet headers to contain a random or arbitrary data item for identifying the data flow to which the packet is assigned (in the form of SSRC and Cookie, respectively). Such data are programmed into the memory 61 so that the correct validation data are supplied by the memory 61 to a comparator 63 in response to the associated flow number.

The masking arrangement 62 uses the flow number to determine the appropriate pre-programmed mask for selecting from the extracted fields the data which should correspond to that supplied by the memory 61. The data are supplied to another input of the comparator 63. When the comparator 63 detects a match indicating that the packet has been validated, it supplies a signal to open a gate 64, which supplies a confirmed flow number to the output 20 of the packet classifier 7. Conversely, if no match is found, the comparator 63 supplies a discard packet signal.

In the case of a protocol which does not make provision for packet validation codes associated with data flows, some other form of validation data may be used, such as the source address in the case of IP packets or the packet length.

The fourth stage 15 thus performs a validation or verification function to ensure that the packet is intact and is validated for transmission in the dataflow corresponding to the flow number. Such an arrangement greatly reduces the possibility of rogue packets being transmitted onwardly and thus reduces the possibility of success of an internet denial of service (DOS) attack.

## Claims

1. A packet classifier for classifying packets flowing through a node of a packet switching network, **characterised by** comprising first to Nth stages (12 - 15), where N is an integer greater than one, arranged to perform in hardware different steps of the packet classification on each packet presented to the classifier (7); the stages (12 - 15) being arranged to process different packets simultaneously and each ith stage (13 - 15) being arranged to process each packet when the (i-1)th stage (12 - 14) has processed the packet for each integer i such that 1< i≤N.

2. A classifier as claimed in claim 1, **characterised in that** the step performed by each ith stage (13 - 15) is dependent on the result of the step performed by the (i-1)th stage (12 -14).

3. A classifier as claimed in claim 1 or 2, **characterised in that** a first (12) of the stages is arranged to identify the protocol of each packet.

4. A classifier as claimed in claim 3, **characterised in that** the first stage (12) is arranged to assign a template number corresponding to the identified protocol.

5. A classifier as claimed in claim 3 or 4, **characterised in that** the first stage (12) is arranged to compare at least part of the header of each packet with first predetermined data for a match.

6. A header as claimed in claim 5, **characterised in that** the first predetermined data are programmable in the first stage (12).

7. A classifier as claimed in claim 5 or 6, **characterised in that** the first stage (12) comprises a plurality of first registers (35) for containing the first predetermined data.

8. A classifier as claimed in any one of claims 5 to 7, **characterised in that** the first stage (12) is arranged to mask the result of the comparison in accordance with second predetermined data.

9. A classifier as claimed in claim 8, **characterised in that** the second predetermined data are programmable in the first stage (12).

10. A classifier as claimed in claim 8 or 9, **characterised in that** the first stage (12) comprises a plurality of second registers (36) for containing the second predetermined data.

11. A classifier as claimed in any one of claims 5 to 10, **characterised in that** the first stage (12) is arranged to discard any packet for which no match is found.

12. A classifier as claimed in any one of claims 3 to 11, **characterised in that** a second (13) of the stages is arranged to extract from the header of each packet at least one field dependent on the identified protocol.

13. A classifier as claimed in claim 12, **characterised in that** the at least one field represents a destination of the packet.

14. A classifier as claimed in claim 13, **characterised in that** a third (14) of the stages is arranged to identify the destination of the packet.

15. A classifier as claimed in claim 14, **characterised in that** the destination is identified as a flow number.

16. A classifier as claimed in claim 14 or 15, **characterised in that** the third stage (14) is arranged to compare at least part of the at least one extracted field with third predetermined data.

17. A classifier as claimed in claim 16, **characterised in that** the third predetermined data are programmable in the third stage (14).

18. A classifier as claimed in claim 16 or 17, **characterised in that** the third stage (14) comprises a content addressable memory arrangement (51 - 54) for the third predetermined data.

19. A classifier as claimed in claim 18, **characterised in that** the content addressable memory arrangement comprises a memory (52) for the third predetermined data, a comparator (54) for comparing the at least one extracted field with the third predetermined data, a masking arrangement (53, 55) for masking the comparator output in accordance with predetermined masking data, and a controller (51) for signalling the packet destination when a match is found.

20. A classifier as claimed in claim 18, **characterised in that** the content addressable memory arrangement comprises a plurality of memories (52₁ - 52ₙ) for the third predetermined data, a plurality of comparators (54₁ - 54ₙ) for simultaneously comparing the at least one extracted field with the third predetermined data from respective ones of the memories (52₁ - 52ₙ), a plurality of masking arrangements (53₁ - 53ₙ, 55₁ - 55ₘ) for simultaneously masking the outputs of respective ones of the comparators (54₁ - 54ₙ) in accordance with predetermined masking data, and a controller (51) for signalling the packet destination when a match is found in any of the masked comparator outputs.

21. A classifier as claimed in claim 14 or 15, **characterised in that** the third stage (14) comprises means (71) for performing a hash function on at least part of the at least one extracted field to derive an address and a memory (72) containing a hash table and arranged to be addressed by the derived address to return the packet destination.

22. A classifier as claimed in claim 21, **characterised in that** the third stage (14) is arranged to perform a linear search (74) if the returned address is not unique.

23. A classifier as claimed in any one of claims 14 to 22, **characterised in that** a fourth (15) of the stages is arranged to confirm the destination of the packet.

24. A classifier as claimed in claim 23, **characterised in that** the fourth stage (15) is arranged to compare at least part of the at least one extracted field with a field corresponding to the destination identified by the third stage (14) and to confirm the destination if a match is found.

25. A classifier as claimed in claim 24, **characterised in that** the fourth stage (15) is arranged to discard the packet if no match is found.
